Europäisches Patentamt

European Patent Office

Office européen des brevets

(11) Veröffentlichungsnummer: **0 187 164**
**A2**

# (12) EUROPÄISCHE PATENTANMELDUNG

(21) Anmeldenummer: 83110017.7

(22) Anmeldetag: 06.10.83

(51) Int. Cl.⁴: **A 01 D 27/00**
A 01 D 23/06, A 01 D 25/00
A 01 D 25/02

(30) Priorität: 07.10.82 DE 3237249

(43) Veröffentlichungstag der Anmeldung:
16.07.86 Patentblatt 86/29

(84) Benannte Vertragsstaaten:
AT BE CH FR GB IT LI NL SE

(71) Anmelder: Hendlmeier, Konrad
Ehweg 1
D-8401 Untersanding(DE)

(72) Erfinder: Hendlmeier, Konrad
Ehweg 1
D-8401 Untersanding(DE)

(74) Vertreter: Wasmeier, Alfons, Dipl.-Ing. et al,
Postfach 382 Greflingerstrasse 7
D-8400 Regensburg(DE)

(54) Rübenerntemaschine.

(57) Eine schleppergeschobene Rübenerntemaschine weist eine Hochförder- und Querfördervorrichtung zum Abführen der Rübenblätter, stabförmige Rodewerkzeuge, die zum Roden in den Boden unterhalb der Rüben eingreifen und die Rüben selbsttätig bei fortschreitender Bewegung im Erdreich lockern und ausheben, eine über den Rodewerkzeugen angeordnete Rübenputzvorrichtung in Form einer rotationssymmetrischen Bürste mit im Querschnitt parabelförmig ausgebildeter Mantelfläche, eine unmittelbar an die Rodewerkzeuge anschließende Querfördervorrichtung sowie eine abschließende Prallwand auf, und stellt eine extrem kurze Maschine dar, die auf besonders einfache Weise als einreihige, zweireihige oder mehrreihige Rübenerntemaschine im Baukastensystem hergestellt werden kann. Die Rodewerkzeuge sind insbesondere Rodeelemente aus Metallstäben, die jeweils einen vertikalen, mit der Halterung befestigten Abschnitt, einen vom freien Ende dieses vertikalen Abschnittes ausgehenden, nach innen und hinten gerichteten Abschnitt, und einen sich daran anschließenden, nach hinten gerichteten Abschnitt besitzen. Der nach hinten gerichtete Abschnitt ist zur horizontalen Ebene ansteigend bzw. sich nach hinten verengend oder sich nach hinten erweiternd ausgebildet.

./...

Fig.1

."Rübenerntemaschine"

Die Erfindung bezieht sich auf Rübenerntemaschinen nach dem
Oberbegriff des Anspruches 1 sowie auf Rodewerkzeuge zum Ernten
von Rüben nach dem Oberbegriff des Anspruches 2.

Es sind einreihige, zweireihige und mehrreihige, z.B. sechsreihige
Rübenroder bekannt. Während die einreihigen und zweireihigen
Rübenroder ausschließlich schleppergezogen ausgebildet sind, sind
beispielsweise die sechsreihigen Rübenroder als Selbstfahrer
konstruiert. Der Anteil der einreihigen Rübenroder an den gesamten
Rübenerntemaschinen beträgt weit über 80%. Der einreihige
Rübenroder köpft, rodet und bunkert die Rüben und legt die Blätter
in Längs- oder Querschwad ab. Der Bunker ist dabei mit dem Roder
zu einer festen Einheit kombiniert. Der zweireihige, schleppergezogene Rübenroder hat gegenüber dem Einreiher ein verhältnismäßig
hohes Gewicht, so daß sein Einsatz in der Praxis sehr begrenzt
ist. Die mehrreihigen, insbes. sechsreihigen Rübenroder, die als
Vollernter mit Eigenantrieb ausgerüstet sind und kein getrenntes
Zugfahrzeug benötigen, sind außerordentlich aufwendige und teuere
Maschinen, die üblicherweise von Maschinenringen oder Genossenschaften betrieben werden. Aufgrund des hohen Gewichtes ist der
Bodendruck bei derartigen Maschinen ungewöhnlich hoch und es setzt
sich zunehmend die Auffassung durch, daß dieser hohe Bodendruck,
zumindest in vielen Einsatzfällen, z.B. bei schwieriger Bodenbeschaffenheit, nicht tragbar ist. Derartige sechsreihige Selbstfahrer haben auch eine große Baulänge, die ihren Einsatz und ihre
Beweglichkeit ebenfalls sehr erschwert. Ein solcher Roder ist
sinnvoll und kostendeckend nur für sehr große Rübenflächen
einsetzbar, so daß die meisten Landwirte für den Einsatz eines
derartigen Vollernters nicht in Frage kommen.

Aufgabe der Erfindung ist es, eine schleppergezogene einreihige oder mehrreihige Rübenerntemaschine zu schaffen, die gegenüber herkömmlichen Rübenerntemaschinen vergleichbarer Leistung eine extrem kurze Bauweise, geringes Gewicht, niedrigen Preis und einfachen Aufbau hat, und mit der das Roden der Rüben so vorgenommen werden kann, daß an den gerodeten Rüben nur ein geringer Erdanteil haftet sowie eine Verdichtung des Erdreiches im Bereich der zu rodenden Rüben durch die Rodewerkzeuge ausgeschaltet ist.

Gemäß der Erfindung wird dies mit den Merkmalen des Kennzeichens des Anspruches 1 sowie des Anspruches 2 erreicht. Weitere Ausgestaltungen der Erfindung sind Gegenstand der Unteransprüche.

Die Rübenerntemaschine nach vorliegender Erfindung wird am vorderen Ende des Schleppers aufgenommen, z.B. über eine Frontladereinrichtung, so daß das Köpfen, Roden und Reinigen sowie Abfördern der Rüben in Fahrtrichtung vor dem Schlepper stattfindet, während hinter dem Schlepper die gerodeten und gereinigten Rüben gebunkert werden. Diese Bunkerung erfolgt vorzugsweise in Form der Selbstverbunkerung, d.h., daß der Bunker mit dem Schlepper fest verbunden ist und der Schlepper einen wesentlichen Teil des Gewichtes des im Bunker befindlichen Ladegutes aufnimmt. Die Rodeeinrichtung nach der Erfindung ist sowohl für einreihige als auch für mehrreihige, z.B. vier- oder sechsreihige Maschinen auslegbar und ist in der Lage, aus der Gare zu roden, weil die Rodewerkzeuge vor dem Schlepper angeordnet sind. Im Gegensatz hierzu ist bei den herkömmlichen ein- und zweireihigen Rübenrodern ein versetztes Roden erforderlich, und es ist außerdem zu Beginn des Rodevorganges ein Beet von Hand vorzuroden.

Neben diesem grundsätzlichen Unterschied in der Arbeitsweise zwischen der erfindungsgemäßen Rübenerntemaschine und bekannten, vergleibbaren Rübenerntemaschinen weist die Maschine nach der Erfindung Einzelvorrichtungen auf, die eine besonders kurze Bauweise, geringes Gewicht, hohe Leistung und einfachen Aufbau ergeben, die zusammen die Herstellung eines Rübenroders gewährleisten, der sowohl vom Preis als vom Einsatz her herkömmlichen,
in der Leistung vergleichbaren Rodern weit überlegen ist.

Grundsätzlich ist der Aufbau der Rübenerntemaschine nach der
Erfindung so ausgelegt, daß pro Rübenreihe eine Rübenernteeinheit
bestehend aus Tast- und Köpfeinrichtung, Abfördereinrichtung für
die geköpften Blätter, Rodewerkzeug und Reinigungsbürste vorgesehen ist und daß jede derartige Einheit von der Frontzapfwelle
des Schleppers angetrieben wird. Mehrere derartiger Rübenernteeinheiten, deren jede für sich einen einreihigen Rübenroder
darstellt, sind im Falle einer mehrreihigen Rübenerntemaschine am
Maschinenrahmen parallel zueinander so angeordnet, daß der Abstand
der jeweiligen Einheit entsprechend den Bedingungen des Einsatzes
auf unterschiedliche Abstände von Rübenreihen einstellbar ist bzw.
die einzelnen Einheiten im Maschinenrahmen so aufgehängt sind, daß
sie sich selbsttätig in durch Anschläge oder dergl. begrenztem
Maße nach links und rechts bewegen können. Der gesamte Maschinenrahmen mit den verschiedenen Erntevorrichtungen einer Ernteeinheit
ist durch Frontladerbetätigung vom Schlepper aus heb- und senkbar.

Die Tast- und Köpfvorrichtung einer jeden Rübenernteeinheit
besteht aus einem in an sich bekannter Weise mit Tastscheiben bzw.
-rädern  arbeitenden Köpfmesser, an das eine Förderbandanordnung
anschließt, die die geköpften Rübenblätter hinter dem Köpfmesser
aufnimmt und abfördert, z.B. auf ein parallel verfahrbares
Aufnahmefahrzeug oder auf eine seitliche Schwad. Insbesondere
werden die geköpften Rübenblätter zwischen zwei im Abstand
voneinander angeordneten, in gleicher Richtung fördernden Förderbändern abtransportiert, deren eines auf der fördernden Oberfläche
mit Noppen ausgerüstet ist, um das Abfördern zu vereinfachen.

Pro Rübenreihe bzw. pro Rübenernteeinheit ist ein Rodewerkzeug in
Form eines Paares stabförmiger Rodeelemente vorgesehen, die
insbesondere als gebogene bzw. ovale Eisenstäbe ausgebildet sind.
Die beiden miteinander zusammenwirkenden Rodeelemente besitzen jeweils einen nach innen gerichteten Abschnitt und einen an diesen anschließenden, nach hinten verlaufenden Abschnitt. Mit diesen Rodewerkzeugen wird einerseits eine Verdichtung des Erdreiches um die Rüben herum und damit ein Anhaften des Erdreiches an den ausgehobenen Rüben weitestgehend verhindert; andererseits ist mit einem solchen Rodewerkzeug gewährleistet, daß durch das Ausheben der Rüben aus dem Erdreich wesentlich weniger Energie für das Roden erforderlich ist als bei herkömmlichen Rodewerkzeugen. Ferner ist der Verschleiß der Rodeelemente im Vergleich zu bekannten Rodewerkzeugen wesentlich geringer. Auch sind die Herstellkosten dieser Rodeelemente um ein Mehrfaches niedriger als bei vergleichbaren bekannten Rodewerkzeugen. Derartige Rodewerkzeuge ersetzen den herkömmlichen Reinigungs-Siebstern, der einen erheblichen Platz- und Gewichtsbedarf hat, so daß die Abmessungen und das Gewicht der gesamten Maschine hierdurch entscheidend geringer gehalten werden können als dies mit herkömmlichen Mitteln der Fall ist. Mit den Rodewerkzeugen nach der Erfindung wird auch erreicht, daß viel weniger Erdreich an den gerodeten Rüben anhaftet, so daß bei der Anlieferung der Rüben an der Fabrik der Erdanteil weit geringer ausfällt als bei vergleichbaren bekannten Maschinen. Damit verbleibt einerseits der Humus weitestgehend auf dem Feld und es wird andererseits an der Rübenfabrik erheblich an Energie-und Deponiekosten für den An- und Abtransport des an den Rüben haftenden Humus gespart.

Diese Rodewerkzeuge sind parallel nebeneinander (entsprechend der Anzahl der erfaßten Rübenreihen) in Arbeitsrichtung unmittelbar hinter der Köpf- und Abfördervorrichtung angeordnet und beanspruchen sehr wenig Platz. Unmittelbar über diesen außerordentlich einfachen und platzsparenden Rodewerkzeugen ist zum Reinigen der Rüben eine Bürstenanordnung vorgesehen, die die herkömmliche Putzschleuder ersetzen. Derartige zylinderförmige, rotierende Bürsten, eine oder mehrere hintereinander pro Rodewerkzeug, weisen radial nach außen verlaufende Borsten auf. Die radiale Länge der Borsten ist auf beiden Seiten in axialer Richtung nach innen zur Achsmitte zu abnehmend ausgebildet, so daß die gerodeten Rüben gleichzeitig auf die Mitte des Bürstenmantels zentriert, gereinigt und abgeschleudert werden. Die Bürsten übernehmen somit neben der Funktion des Reinigens der Rübenkörper(bisher Putzschleuder) das Abfördern sowie Führen der Rüben. Zweckmäßigerweise sind die Borsten aus einem besonders abriebfestenKunststoff hergestellt, z.B. aus Polyamid. An ihren freien Enden können die Borsten Versteifungen aufweisen, die aus Eisen, in den Borsten integrierten Eisenteilchen oder dergl. bestehen. Der Antrieb dieser Bürsten erfolgt vom Schlepper aus, und die Bürsten sind vorzugsweise in Arbeitsrichtung verstellbar. Wenn anstelle einer Bürste pro Rodewerkzeug zwei oder mehrere Bürsten hintereinander angeordnet sind, um den Reinigungseffekt zu verbessern, haben die Bürstenzweckmäßigerweise in Fahrtrichtung einen geringeren Achsabstand voneinander als der Summe der Radien der jeweiligen Bürsten an der Stelle maximalen Durchmessers entspricht, so daß die Bürsten in den äußeren Bereichen ineinandergreifen, eine erhöhte Reinigungswirkung ergeben und die Weiterführung der Rüben in der Mulde der Mantelfläche bewirken. Die auf diese Weise gereinigten Rüben werden von den Putzbürsten entgegen der Fahrtrichtung des Schleppers abgeschleudert und treffen auf eine am Maschinenrahmen befestigte Prallwand, z.B. nach abwärts gerichtete Stäbe, die die Rodevorrichtung zum Schlepper hin abschließen. Beim Auftreffen auf diese am bodennahen Ende z.B. freien Stäbe wird nochmals eine Reinigung der Rüben erzielt. Die gereinigten Rüben fallen von der Prallwand nach abwärts auf einen oder mehrere bodennahe Querförderer, z.B. eine Förderbandanordnung oder Schneckenförderer, die die Rüben abtransportieren und entweder auf einen fahrzeugeigenen Bunker fördern oder auf ein nebenher fahrendes Fahrzeug übergeben. Bei einer Selbstverbunkerung, bei der der Bunker mit dem Schlepper fest verbunden ist, fördert der Querförderer der Rübenerntemaschine die gereinigten Rüben auf ein Längsförderband, das sowohl mit der Rübenerntemaschine als auch mit dem Schlepper befestigt ist. Die Rüben werden auf diesem Förderband in Längsachse des Schleppers nach rückwärts befördert, und dort über ein weiteres Förderband an einen Bunker abgegeben, der z.B. einen Kratzboden aufweist.

Nachstehend wird die Erfindung in Verbindung mit der Zeichnung anhand von Ausführungsbeispielen erläutert. Es zeigt:

Fig. 1 eine schematische perspektivische Ansicht einer einreihigen Rübenerntemaschine nach der Erfindung in Prinzipdarstellung,

Fig. 2 eine schematische Seitenansicht einer Rübenerntemaschine nach der Erfindung,

Fig. 3 eine Aufsicht auf die Maschine nach Fig. 2,

Fig. 4 in schematischer Prinzipdarstellung die Selbstverbunkerung,

Fig. 5 eine Bürstenanordnung, wie sie in der Rübenerntemaschine nach Fig. 1, 2 und 3 verwendet wird,

Fig. 6 eine schematische Darstellung des Rodevorganges mit einer bekannten Vorrichtung, im Schnitt,

Fig. 7 eine schematische Darstellung des Rodevorganges mit der erfindungsgemäßen Rodevorrichtung, im Schnitt,

Fig. 8 eine Vorderansicht der erfindungsgemäßen Vorrichtung in schematischer Darstellung,

Fig. 9 eine Aufsicht auf die erfindungsgemäßen Rodevorrichtung in schematischer Darstellung, und

Fig. 10 eine Seitenansicht einer Ausführungsform der Rodevorrichtung nach der Erfindung.

Ein Schlepper 1, von dem lediglich das Vorderteil mit dem Vorderrad 2 schematisch andeutet ist, nimmt mit seinem Frontladerarm 3 über Befestigungsstellen 4 einen Träger 5 des Maschinenrahmens 6 der Rübenerntemaschine auf. Am vorderen Ende des Maschinenrahmens 6 ist eine Tastradanordnung 7 über eine Achse 8 befestigt. Vorzugsweise sind pro Rübenreihe vier Tasträder 7 vorgesehen, denen eine ebenfalls am Rahmen 6 befestigte Rübenköpfvorrichtung 9 mit Ableitvorrichtung 10 für die Rübenblätter zugeordnet ist. Die Rübenblätter werden von der Förderanordnung 11, 12 schräg nach oben und von einem Querförderer 13 aus der Maschine abgefördert. Mit 14 ist die Rübe vor dem Köpfen, mit 14' die geköpfte Rübe schematisch angedeutet. Ein Rodewerkzeug 15, das am Maschinenrahmen 6 befestigt ist, hebt die Rübe 14 aus dem Erdreich, führt sie einer umlaufenden Reinigungsbürste 16 zu und gelangt auf den Querförderer 17, von dem die gerodeten Rüben aus der Maschine abtransportiert werden. Am schlepperseitigen Ende des Rahmens ist eine Prallwand 18 vorgesehen, gegen die die Rüben von der Bürste 16 geschleudert werden und von der die Rüben nach abwärts auf den Querförderer fallen.

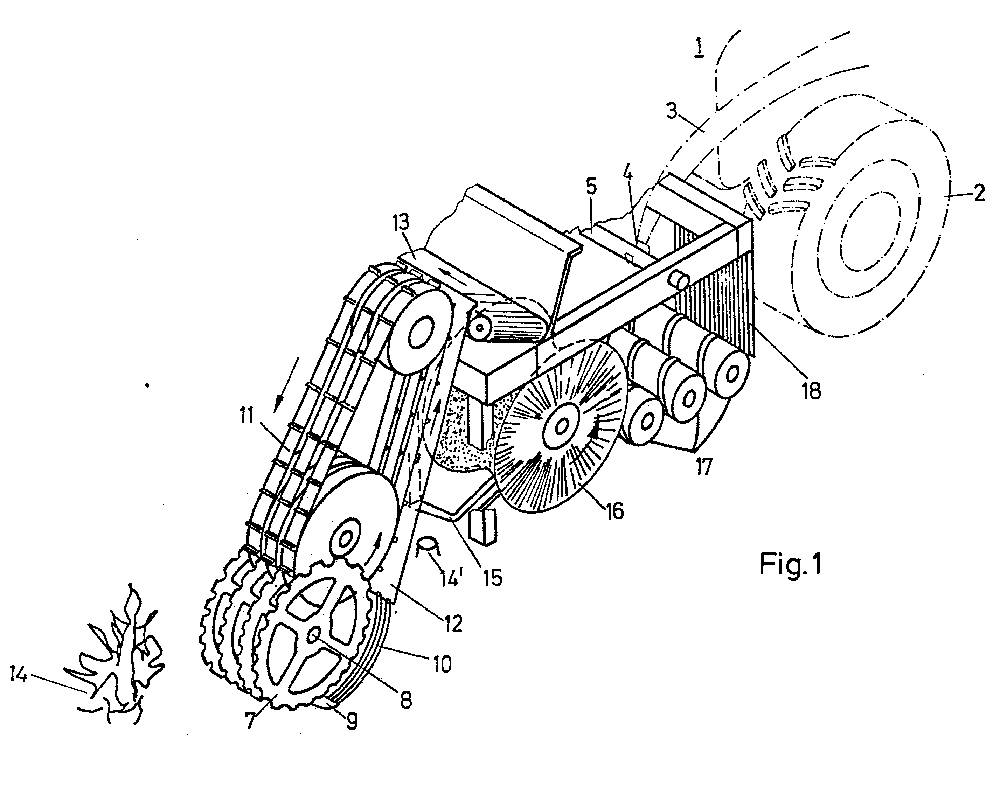

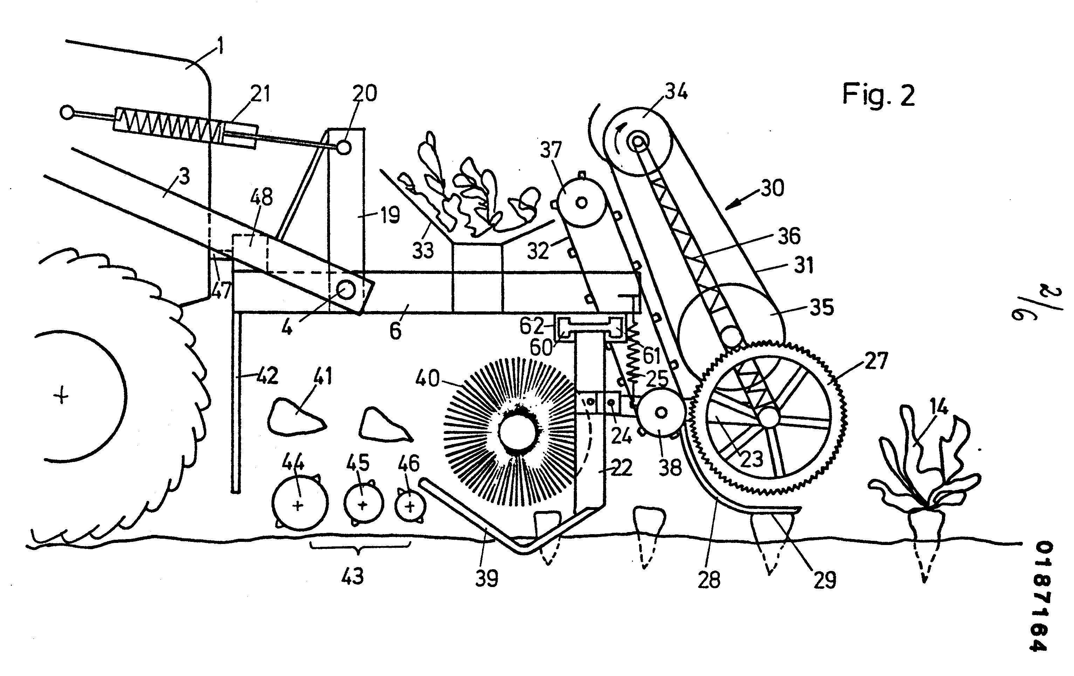

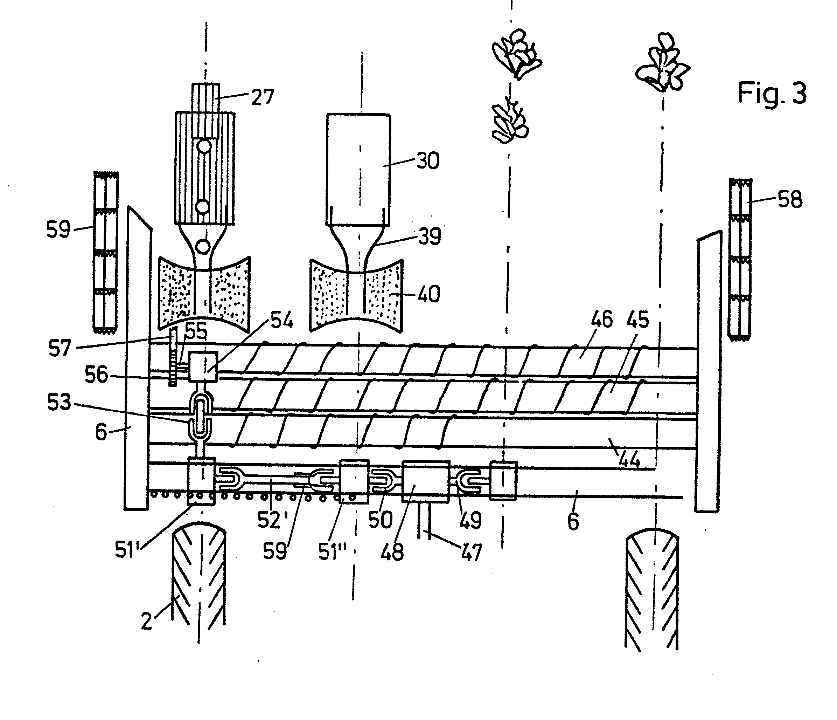

Fig. 2 zeigt ein Seitenansicht und Fig. 3 eine Aufsicht auf eine Rübenerntemaschine in mehrreihiger (vierreihige Ausführung dargestellt), die im wesentlichen einer Aneinanderreihung mehrerer einreihiger Maschinen nach Fig. 1 entspricht. Wie in Fig. 2 gezeigt, ist am Maschinenrahmen 6 ein nach oben verlaufender Träger 19 befestigt, an dessen oberem Ende bei 20 eine Druckfeder 21 angelenkt ist, die vom Schlepper aus zum Heben und Senken der Rübenerntemaschine bedienbar ist. Am vorderseitigen, d.h. vom Schlepper abgewandten Ende des Maschinenrahmens 6 sind zu beiden Seiten der Maschine vertikal nach unten gerichtete Träger 22 vorgesehen, die jeweils einen nach vorne ragenden Tragarm 23 aufnehmen, der im vertikalen Träger 22 bei 24 gelenkig angeordnet ist und mittels am Rahmen 6 befestigter Feder 25 unter Vorspannung steht. Jeder Arm 23 nimmt an seinem vorderen Ende eine angetriebene Welle 26 auf, auf der die Tasträder 27 (analog der Tastradanordnung 7 nach Fig. 1) gelagert sind. Die Tasträder 27 sind mit Bodenantrieb ausgebildet und weisen eine Voreilung von z.B. 8% auf. Ihre Arbeitsweise ist an sich bekannt, so daß hier nicht näher darauf eingegangen wird. Die Tasträder 27 sind an ihrem Außenumfang gezähnt oder entsprechend ausgebildet, damit sie für die Mitnahme der Rübenblätter geeignet sind. Die Tragarme 23 nehmen eine nach unten verlaufende gitterförmige Wanne 28 auf, an deren vorderem Ende Köpfmesser 29 an sich bekannter Ausführungsform angeordnet sind, die unmittelbar unterhalb der Tastradenordnungen 27 den Kopf der Zuckerrüben 14 abtrennen. Der Maschinenrahmen 6 nimmt ferner pro Reihe eine Transportvorrichtung 30 auf, die zweckmäßigerweise aus Förderbändern 31 und 32 besteht, die so zueinander angeordnet sind, daß die beiden einander zugewandten Trume zwischen sich die vom Messer 29 abgeschnittenen Rübenblätter aufnehmen und nach oben transportieren, wobei die Übergabe von dem Köpfmesser 29 an die Förderbänder 31 und 32 durch die gezähnte Umfangsfläche der Tasträder 27 unterstützt wird. Die nach oben beförderten Rübenblätter bzw. Blätter und Rübenköpfe werden in einer Wanne 33 gesammelt und dort seitlich ausgebracht, z.B. über einen Querförderer 13 (Fig. 1). Die beiden Förderbänder 31 und 32 sind vorzugsweise vom Schlepper aus über Kettentrieb angetrieben. Die Antriebsräder 34 und 35 des Förderbandes 31 sind über einen Träger 36 miteinander und mit dem Maschinenrahmen 6 befestigt. Entsprechend sind die Räder 37 und 38 des Förderbandes 32 mit dem Maschinenrahmen 6 befestigt. Beide Förderbänder 31 und 32 laufen - vom Schlepper angetrieben - mit synchroner Geschwindigkeit um, und das Förderband 32 hat auf seiner Außenfläche vorzugsweise eine Vielzahl von Noppen, die die Mitnahme der abgeschnittenen Blätter und Rübenköpfe vereinfachen. Entsprechende Noppen können auch auf dem Förderband 31 vorgesehen sein.

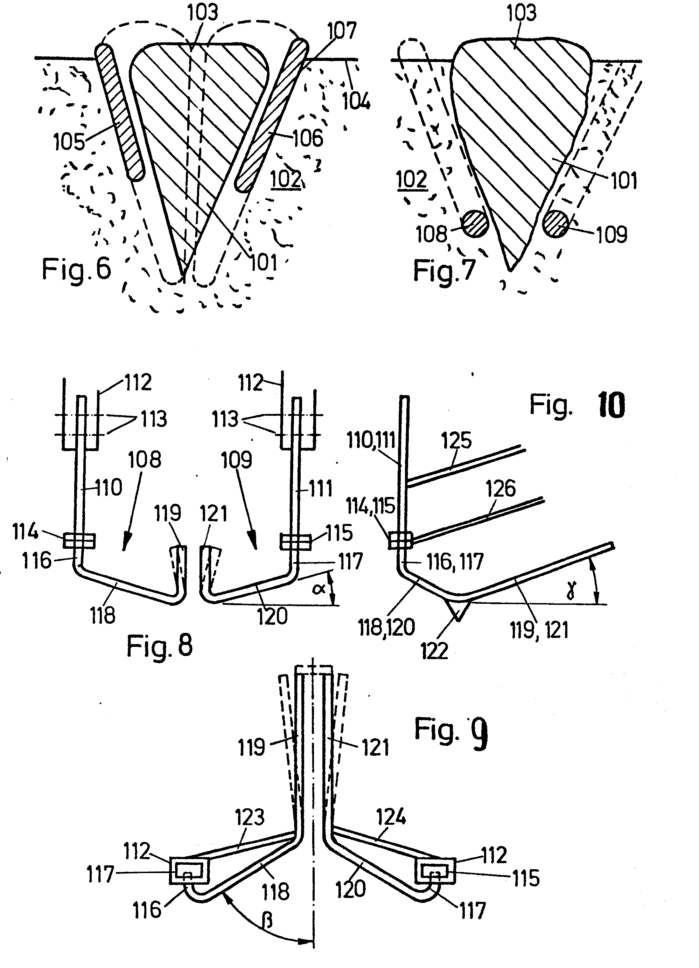

Mit dem vertikalen Träger 22 des Maschinenrahmens 6 ist (pro Reihe) eine Rodewerkzeug 39 starr befestigt, so daß mehrreihigen Maschinen die einzelnen Rodewerkzeuge 39 parallel zueinander und nebeneinander angeordnet sind. Da dieses Rodewerkzeug für vorliegende Erfindung von ausschlaggebender Bedeutung ist, wird ein derartiges Rodewerkzeug anhand der Figuren 6 - 10 weiter unten näher beschrieben.

In unmittelbarer Nähe über dem Rodewerkzeug und mit dem Maschinenrahmen 6 verbunden ist pro Rübenreihe eine Reinigungsbürste 14 vorgesehen, die vom Schlepper 1 aus angetrieben ist und deren Achse horizontal zum Boden und vertikal zur Fahrtrichtung angeordnet ist. Auf Einzelheiten dieser Bürste 40 wird ebenfalls weiter unten eingegangen. Die Bürste 40 kann durch eine oder mehrere weitere entsprechende Bürsten ergänzt werden, die hintereinander geschaltet sind, um den Reinigungs- und Führungseffekt dieser Bürsten auf die gerodeten Rüben zu verbessern. Durch den Kontakt der Bürsten 41 mit den durch die Rodewerkzeuge 39 aus dem Erdreich herausgehobenen Rüben wird eine intensive Reinigung der Rüben erzielt. Die Bürsten 40 laufen mit so hoher Geschwindigkeit um, daß die Rüben 41 nach rückwärts, d.h. entgegen der Fahrtrichtung, abgeschleudert werden. Die Rüben 41 treffen dabei auf eine mit dem Maschinenrahmen 6 befestigte Prallwand 42, die z.B. aus einzelnen Stäben besteht, welche in ihrer Gesamtheit eine rückwärtige Abschlußwand der Rübenerntemaschine bilden. Die die Prallwand 42 bildenden Stäbe sind nach einer speziellen Ausführungsform der Erfindung an ihrem oberen Ende starr mit dem Maschinenrahmen 6 verbunden und am unteren Ende frei, so daß sie beim Auftreffen der Rüben 41 federn, wodurch sich ein zusätzlicher Reinigungseffekt ergibt. Die Rüben 41, die auf die Prallwand 42 aufgetroffen sind und von dort nach abwärts fallen, gelangen auf eine bodennahe Querfördervorrichtung 43, die z.B. aus mehreren einzelnen Querförderern 44, 45, 46 besteht. Diese Querförderer können beispielsweise als Förderbänder oder als Walzen mit schneckenförmigen Erhebungen ausgebildet sein.

Der Antrieb aller umlaufenden Bestandteile der einzelnen Rübenernteeinheiten der Rübenerntemaschine erfolgt vom Schlepper 1 aus über eine Frontzapfwelle 47, die mit einem Getriebe 48 auf dem Maschinenrahmen 6 gekoppelt ist. Von dem Getriebe 48 gehen Abtriebswellen 49 und 50 aus, die zwischen Getriebe 51, 51´, 51´´

antreiben, welche untereinander und mit dem Getriebe 48 über Kardanwellen 52, 52', 52'' oder entsprechende Antriebsverbindungen gekoppelt sind. Von den Zwischengetrieben 51, 51', 51'' gehen in Fahrtrichtung Kardanwellen 53 ab, die mit einem weiteren Zwischengetriebe 54 gekoppelt sind, dessen Abtrieb 55 mit einem Antriebsritzel 56 oder dergl. verbunden ist, das eine Antriebskette 57 antreibt, die mit einem entsprechenden Kettenrad für die umlaufenden Teile der jeweiligen Rübenernteeinheit gekoppelt ist. Durch die Kardanwellen 53 ist eine Bewegung der einzelnen Rübenernteeinheiten quer zur Fahrtrichtung, also nach links und rechts, bis zu einem bestimmten Ausmaß möglich. Die einzelnen Rübenernteeinheiten sind, um diese seitliche Bewegbarkeit zu gewährleisten, über den Tragarm 22 am Maschinenrahmen 6 frei aufgehängt, und zwar über Kugellager 60, 61, die in einem Führungsträger 62 des Rahmens 6 laufen. Die Kugellager 60 und 61 bzw. Laufrollen sind miteinander über eine Achse 63 verbunden, die starr mit dem vertikalen Träger 22 befestigt ist. Zur Begrenzung der seitlichen Bewegung dieser Kugellager sind in der Führung 62 (nicht dargestellte) Anschläge vorgesehen, die zweckmäßigerweise verstellbar ausgebildet sind und die die Seitwärtsbewegung der Rübenernteeinheiten begrenzen bzw. festlegen, so daß beispielsweise die Rübenerntemaschine auf unterschiedliche Reihenabstände zwischen z.B. 400 und 500 mm einstellbar ist.

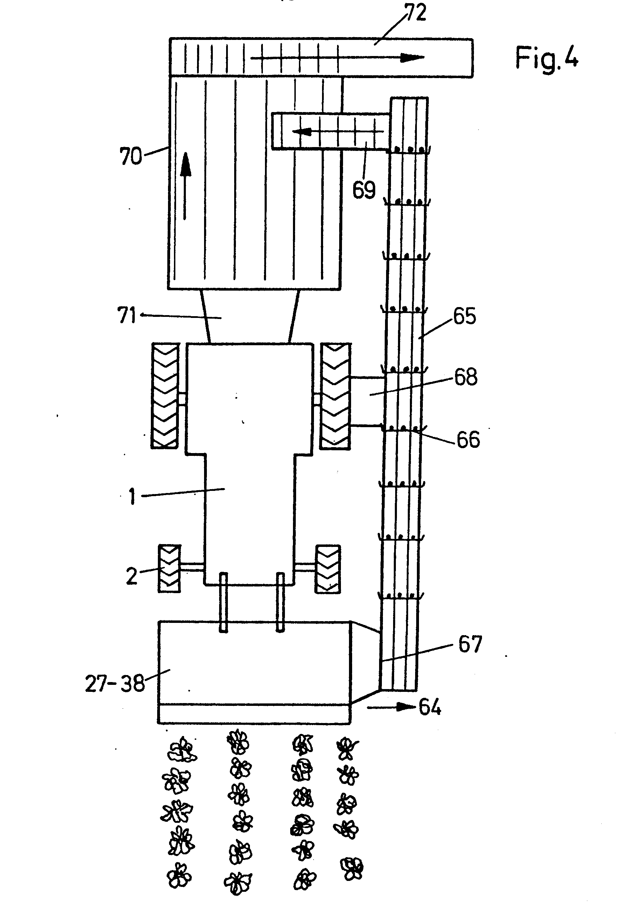

Aus der Darstellung nach Fig. 4 ergibt sich eine Ausführungsform der Erfindung, bei der die gerodeten Rüben hinter dem Schlepper gebunkert werden, vorzugsweise in Form der Selbstverbunkerung. Bei dieser Ausführungsform ist der Aufbau der gesamten Vorrichtung schematisch dargestellt. Der Schlepper 1 nimmt die Rübenerntevorrichtung nach den Figuren 1 bis 4 am vorderen Ende auf. Die vor der Rübenerntemaschine angedeutete Rübenreihen werden aus der Gare gerodet, die gerodeten Rübenköpfe werden seitlich in Pfeilrichtung 64 abgefördert und gelangen auf ein Transportwand 65, das mit Mitnehmern 66 besetzt ist, das am vorderen Ende bei 67 fest mit der Rübenerntemaschine und das bei 68 fest mit dem Schlepper 1 verbunden ist. Das hintere Ende der Transportvorrichtung 65 wirkt mit einer Fördervorrichtung 69 zusammen, die die aus dem Förderband 65 ankommenden Rüben in einen Bunker 70 überführt. Der Bunker
70 ist bei 71 fest mit dem Schlepper 1 verbunden. Er weist
vorzugsweise einen Kratzboden auf, mit dessen Hilfe die Rüben aus
dem Bunker auf ein Überladeband 72 gelangen, von wo die weitere
Verarbeitung der Rüben erfolgt.

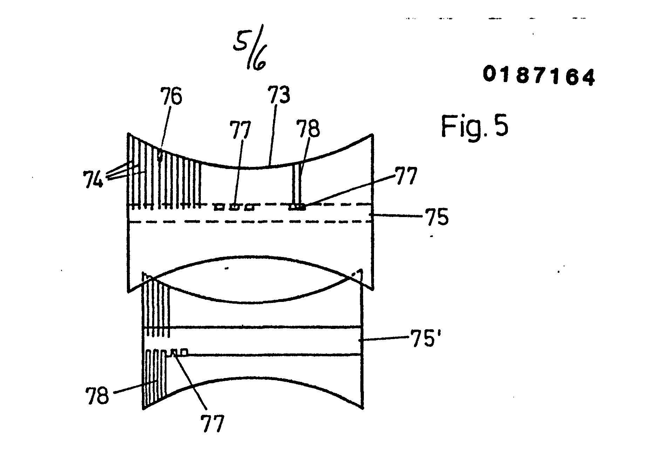

In Fig. 5 ist eine Reinigungsbürste 40 näher dargestellt. Die
Bürste 40 weist ein rotationssymmetrische, im Querschnitt parabelförmige Mantelfläche 73 auf, die dadurch entsteht, daß die
einzelnen Borsten 74 von der äußeren Begrenzung nach innen zur
Mitte zu in ihrer radialen Erstreckung abnehmen. Die Borsten 74
sind mit der Achse 75 entweder einstückig hergestellt, wenn die
Bürste ein Kunststoffgießteil ist, oder aber in sonstiger Weise
mit dem Achsenkörper 75 befestigt, z.B. verklebt oder gesteckt,
wobei insbes. Vertiefungen 77 im Achsenkörper 75 vorgesehen sind,
die die Borsten bzw. eine Borstenschleife aufnehmen. Des weiteren
können die Borsten 74 an ihrem äußeren Ende bei 76 verstärkt
ausgebildet, z.B. mit Eisenteilchen versehen sein oder aber
Eisenspitzen aufweisen. Die Ausgestaltung der Borsten 74 ist
hierauf jedoch nicht beschränkt. Bei der in Fig. 5 gezeigten
Darstellung ist eine zweite Bürste 79 der ersten Bürste 40 so
zugeordnet, daß beide Bürsten in Fahrtrichtung hintereinander und
einander überlappend bzw. ineinandergreifend angeordnet sind.
Damit wird der Weitertransport und die Führung der Rüben von der
einen zur unmittelbar dahinterliegenden Bürste wie auch der
Reinigungseffekt verbessert. Durch die besondere Ausgestaltung der
Mantelfläche der Bürste wird erreicht, daß die Rüben während der
Drehung der Bürsten von außen zur Mitte geführt und dort gesammelt
werden, was einen besonders guten Reinigungs- und Fördereffekt
ergibt.

In den Figuren 6, 7, 8, 9 und 10 ist eine Ausführungsform eines
Rodewerkzeuges nach der Erfindung im einzelnen dargestellt. Die in
den Figuren 6 und 7 mit 101 bezeichnete Rübe sitzt im Erdreich
102. Sie ist, wie mit 103 angedeutet, geköpft dargesellt; die Bodenoberfläche ist mit 104 bezeichnet. Mit 105 und 106 sind die beiden Polderschare eines bekannten Rodeaggregates bezeichnet, die die massiven Seiten einesKanales bilden, in welchem die Rübe 101 mit dem umgebenden Erdreich 107 aufgenommen ist. Wie schematisch angedeutet, verjüngen sich die Polderschare in die Zeichenebene hinein (am ablaufenden Ende sind die Polderscharejeweils ca. doppelt so hoch wie am einlaufenden Ende), so daß das zwischen den Innenflächen der Schare und der Umfangsfläche der Rübe befindliche Erdreich bei der Relativbewegung zwischen Rübe und Scharen stark verdichtet wird und an der Rübe beim Verlassen der Polderschare eine unregelmäßige Schicht stark verdichteten Erdreiches anhaftet, die durch die in den Erntemaschinen vorgesehenen Reinigungsvorrichtungen nicht entfernt werden kann. Im Gegensatz hierzu ist in Fig. 7 dargestellt, wie die stabförmigen Rodeelemente 108 und 109 zunächst mit dem unteren Endteil der Rübe in Eingriff kommen, die Rübe durch die Bewegung der Rodeelemente, die nach hinten und oben geneigt sind, angehoben wird, so daß die vom Erdreich gelöste Rübe zwangsläufig und in Linienkontakt mit den Rodeelementen 108 und 109 aus dem Erdreich herausgehoben wird. Hierbei erfolgt keine bzw. keine nennenswerte Verdichtung des Erdreiches, da ds die Rüben umgebende Erdreich seitlich beliebig ausweichen kann, was im Falle der Polderschare durch die flächenhafte Begrenzung nicht möglich ist. Der geringe Anteil an Erdreich, der im Falle der Darstellung nach Fig. 7 an den Rüben anhaftet, kann auf einfache Weise durch herkömmliche, mit den Rodemaschinen gekoppelten Reinigungsvorrichtungen entfernt werden, so daß die Rübenerntemaschine relativ saubere Rüben mit einem sehr geringen Erdanteil liefert.

Die stabförmigen Rodeelemnte 108 und 109 sind mit Halterungen 110 und 111 verbunden, welche über Kupplungen 112, 112 und Schraubverbindungen 113, 113 mit dem Rahmen der Rübenerntemaschine befestigt sind. Die Halterungen 110 und 111 weisen Aufnahmeelemente 114 und 115 für die Befestigungsansätze 116 und 117 der stabförmigen Rodeelemente 108, 109 auf, die von den Ansätzen 116, 117 in Abschnitte 118, 120 und weitere Abschnitte 119, 121 übergehen.

Dabei sind die Stäbe der Rodeelemente 108, 109 so gebogen, daß die Abschnitte 118 und 120 in einem Winkel $\alpha$ zur horizontalen Ebene nach abwärts aufeinander zu und im Winkel ß oder nach vorne aufeinander zu verlaufen, während die daran anschließenden Abschnitte 119, 121 so geformt sind, daß sie nach hinten verlaufen und in einem Winkel $\gamma$ gegenüber der horizontalen Ebene ansteigen. Die Abschnitte 119 und 121 können dabei parallel zueinander verlaufen, sie können jedoch auch in einem bestimmten Winkel nach hinten auseinander oder aufeinander zu gerichtet sein; anstelle des geradlinigen Verlaufes der Abschnitte 119, 121 können diese Abschnitte wellenförmig oder in sonstiger Weise gekrümmt ausgebildet sein, wobei beispielsweise der hintere freie Teil dieser Abschnitte horizontal ausgebildet sein kann. Auch können die hinteren Enden der Abschnitte 119 und 121 entweder frei sein, d.h. keine Verbindung miteinander haben, oder aber miteinander mechanisch verbunden sein, was die Steifigkeit der Anordnung erhöht, den Übergang der Rüben in den Siebstern jedoch erschwert. Die Wahl der Winkel $\alpha$, ß und $\gamma$ hängt im wesentlichen von der Bodenbeschaffenheit und von dem zu rodenden Gut ab und ist normalerweise nicht einstellbar, so daß für unterschiedliche Winkel unterschiedliche Rodeelemente verwendet werden. Die Erfindung ist jedoch nicht auf derartige starre Winkel beschränkt; vielmehr liegt es auch im Rahmen vorliegender Erfindung, die Stabelemente so auszubilden, daß sie in ihren Neigungswinkeln verstellbar sind. Der Querschnitt der Stäbe der Rodeelemente kann entweder kreisförmig, oval, tropfenförmig, halbkreisförmig mit auflaufender Spitze oder dergl. sein; es kann jedoch auch ein quadratischer, rechteckförmiger oder dergl. Querschnitt gewählt werden. Es hat sich gezeigt, daß es zweckmäßig ist, an der unteren Begrenzung der Stäbe schneidenförmige Ansätze 122 zum Freischneiden der Restwurzeln vorzusehen; im Rahmen vorliegender Erfindung ist es aber auch möglich, derartige Ansätze über einen größeren Bereich der Stäbe vorzusehen oder die Stäbe über ihre gesamte Erstreckung mit derartigen Ansätzen zu versehen. Ferner hat es sich als zweckmäßig herausgestellt, die Stäbe mit Verstrebungen 123, 124 zu versteifen. Zur Führung der Rüben ist es auch sinnvoll, etwa parallel zu den Abschnitten 119 und 121 verlaufende Führungsstäbe an den Rodeelementen und/oder an
der Halterung anzubringen, so daß die Rüben in der durch die
Abschnitte 119 und 121 gebildeten Führungsrinne gehalten werden
und nicht herausfallen.

Patentansprüche:

1. Schleppergezogene Rübenerntemaschine, mit einer Tastvorrichtung, einer Rübenköpfvorrichtung, einer Fördervorrichtung zum
Abtransportieren der abgeköpften Rübenblätter, einer Rodevorrichtung zum Auslösen der Rüben aus dem Boden, einer an die
Rodevorrichtung anschließenden Rübenputzvorrichtung, und einer
Fördervorrichtung zum Ausbringen der gerodeten und gereinigten
Rüben aus der Erntemaschine,
dadurch gekennzeichnet, daß

a) die Fördervorrichtung (7, 10, 11, 12, 13; 30 - 38) zum
   Abfördern der abgeköpften Blätter aus zwei miteinander
   zusammenwirkenden, parallelen Förderbändern (31, 32)
   besteht, deren einander zugewandte Trume die Blätter von der
   Rübenköpfvorrichtung (8, 10, 28, 29) übernehmen,

b) die Rodevorrichtung (15, 39) Rodewerkzeuge aufweist, die zum
   Roden in den Boden unterhalb der Rüben (14´) eingreifen und
   die Rüben selbsttätig bei fortschreitender Bewegung im
   Erdreich lockern und dann ausheben,

c) die Rübenputzvorrichtung (16, 40) unmittelbar über der
   Rodevorrichtung (15, 39) angeordnet ist und eine zylinderförmige, auf einer horizontalen Achse umlaufende Bürste ist,
   die die Rüben reinigt und von der Rodevorrichtung wegschleudert,

d) im Abstand von der Rübenputzvorrichtung (15, 40) eine
   nachgiebige Prallwand (18, 42) vorgesehen ist, auf die die
   von der Putzvorrichtung (16, 40) aus der Rodevorrichtung
   (15, 39) abgeschleuderten Rüben (41) auftreffen,

e) ein Querförderer (17, 43 - 46) zwischen Putzvorrichtung und
   Prallwand vorgesehen ist, der die von der Prallwand nach
   abwärts fallenden Rüben aus der Maschine ausbringt, und

f) Tastvorrichtung (7, 27), Blattabfördervorrichtung (11, 12,
   30 - 38), Köpfvorrichtung (9, 29), Rodevorrichtung (15, 39)
   und Rübenputzvorrichtung (16, 40) als Einheit von der Frontzapfwelle (47) des Schleppers (1) aus angetrieben und quer zur Fahrtrichtung verschiebbar am Maschinenrahmen (6) angeordnet sind.

2. Vorrichtung zum maschinellen Roden von Zuckerrüben oder dergl. Wurzelfrüchten, für Rübenerntemaschinen zwischen Rübenköpf- und Rübenreinigungsvorrichtung, bei der ein aus zwei miteinander zusammenwirkenden Rodeelementen bestehendes Rodewerkzeug pro Rübenreihe zu beiden Seiten der im Erdreich befindlichen, zu rodenden Rüben durch das Erdreich geführt wird, das die Rüben im Erdreich lockert und auf die Reinigungsvorrichtung übergibt, insbes. für eine Rübenerntemaschine nach Anspruch 1, dadurch gekennzeichnet, daß die beiden Rodeelemente (108, 109; 118, 121) des Rodewerkzeuges stabförmig ausgebildet sind, und daß jeder Stab einen mit der Halterung (114, 115) verbundenen, nach innen gerichteten Abschnitt (118, 120) und einen sich daran anschließenden, nach hinten gerichteten Abschnitt (119, 121) besitzt.

3. Rübenerntemaschine nach Anspruch 1, dadurch gekennzeichnet, daß die Rübenernteeinheit(en) an einem Maschinenrahmen (6) befestigt ist (sind), der von einer Frontladereinrichtung (3) des Schleppers (1) getragen ist, und daß die umlaufenden Teile einer jeden Rübenernteeinheit von der Frontzapfwelle (47) des Schleppers (1) aus über ein mit dem Maschinenrahmen (6) befestigtes Getriebe (48) angetrieben sind.

4. Rübenerntemaschine nach Anspruch 3, dadurch gekennzeichnet, daß das Getriebe (48) Abtriebswellen (49, 50) für Zwischengetriebe (51, 51', 51'') aufweist, daß jeder Rübenernteeinheit ein Zwischengetriebe mit Antrieb zugeordnet ist, und daß die Übertragung des Antriebes vom Zwischengetriebe (51) zu dem Antriebsrad (56) an der jeweiligen umlaufenden Arbeitsvorrichtung über Kardanwellen (53) erfolgt.

5. Rübenerntemaschine nach Anspruch 1, 3 oder 4, dadurch gekennzeichnet, daß jede Rübenernteeinheit an einem vertikalen Träger
(22) des Rahmens (6) befestigtist, und daß die einzelnen Träger
(22) einer mehrreihigen Rübenerntemaschine am Maschinenrahmen
(6) querbeweglich geführt sind.

6. Rübenerntemaschine nach Anspruch 5, dadurch gekennzeichnet, daß
die querbewegliche Führung aus Kugellagern (60, 61) und einer
am Rahmen (6) starr angebrachten Laufschiene (62) besteht, die
mit dem Träger (22) starr befestigt ist.

7. Rübenerntemaschine nach einem der Ansprüche 1, 3 - 6, dadurch
gekennzeichnet, daß die Rübenputzvorrichtung (16, 40) eine
rotationssymmetrische Bürste mit horizontaler Achse ist, deren
Mantelfläche im Querschnitt parabelförmig ausgebildet ist,
wobei der Scheitelpunkt der Parabel in Längsachse der Bürste
mittig liegt.

8. Rübenerntemaschine nach Anspruch 7, dadurch gekennzeichnet, daß
die Bürste (40) einen zylindrischen Kern (75) mit Aussparungen
(77) zur Aufnahme der Borsten (74) bzw. Borstenschleifen (78)
besitzt.

9. Rübenerntemaschine nach Anspruch 7 oder 8, dadurch gekennzeichnet, daß die Borsten (74) mit dem Kern (75) verklebt,
gesteckt oder dergl. befestigt sind.

10. Rübenerntemaschine nach einem der Ansprüche 7 - 9, dadurch
gekennzeichnet, daß die Borsten (74) am äußeren Ende (76)
verstärkt ausgebildet sind, z.B. mit Eisenteilchen versehen
sind.

11. Rübenerntemaschine nach einem der Ansprüche 7 - 10, dadurch
gekennzeichnet, daß zwei oder mehr Bürsten (40, 49) hintereinander angeordnet sind, und daß der Abstand der beiden hintereinander angeordneten Bürstenachsen (75, 75') kleiner ist als der Durchmesser der Bürsteim linken bzw. rechten Außenbereich, derart, daß die Borsten (76) in den Außenbereichen sich überlappen und bei einer Rotation ineinandergreifen.

12. Vorrichtung nach einem der Ansprüche 1 - 11, dadurch gekennzeichnet, daß jeder Stab (108, 109; 118 - 121) einen mit der Halterung (114, 115) verbundenen, nach innen und hinten bzw. nach innen und vorne gerichteten Abschnitt (118, 120) und einen sich an diesen Abschnitt anschließenden, nach hinten und im Winkel zur horizontalen Ebene ansteigenden bzw. sich nach hinten verengenden bzw. sich nach hinten erweiternden Abschnitt (119, 121) besitzt.

13. Vorrichtung nach einem der Ansprüche 1 - 12, dadurch gekennzeichnet, daß der Stab ein Rundeisenstab ist.

14. Vorrichtung nach einem der Ansprüche 1 - 12, dadurch gekennzeichnet, daß der Stab einen ovalen, tropfenförmigen, halbkreisförmigen oder dergl. von der Kreisform abweichenden Querschnitt hat.

15. Vorrichtung nach einem der Ansprüche 1 - 14, dadurch gekennzeichnet, daß auf der Unterseite des Stabes (108, 109) im Bereich der tiefsten Stelle des Rodeelementes ein nach unten stehender, schneidenartiger Ansatz (122) vorgesehen ist.

16. Vorrichtung nach einem der Ansprüche 1 - 15, dadurch gekennzeichnet, daß das Rodeelement (108, 109) lösbar mit der Halterung (114, 115) verbunden ist.

17. Vorrichtung nach einem der Ansprüche 1 - 16, dadurch gekennzeichnet, daß die beiden von den Halterungen (114, 115) ausgehenden, im Winkel nach innen verlaufenden Abschnitte (118, 120) Verstrebungen (123, 124) aufweisen.

18. Vorrichtung nach einem der Ansprüche 1 - 17, dadurch gekennzeichnet, daß an den Rodeelementen (108, 109) und/oder der Halterung (114, 115) Stäbe (125, 126) zum Führen der Rüben angeordnet sind.

19. Vorrichtung nach einem der Ansprüche 1 - 18, dadurch gekennzeichnet, daß die Stababschnitte (119, 121) an ihrem hinteren Ende geschlossen sind.

20. Vorrichtung nach einem der Ansprüche 1 - 19, dadurch gekennzeichnet, daß die Stababschnitte (119, 121) am hinteren Ende offen sind, d.h. keine Verbindung miteinander aufweisen.

21. Vorrichtung nach einem der Ansprüche 1 - 20, dadurch gekennzeichnet, daß die nach hinten ansteigenden Abschnitte (119, 121) eine von der geradlinigen Form abweichende Form haben und insbesondere am Auslaufende horizontal ausgebildet sind.

22. Vorrichtung nach einem der Ansprüche 1 - 21, dadurch gekennzeichnet, daß die einzelnen Stabschnitte als getrennte Stabteile ausgebildet sind, und daß die Einstellwinkel dieser Stabteile verstellbar sind.

0187164

Fig.1

Fig. 2

2/6

0187164

Fig. 3

0187164

0187164

Fig.4

0187164

Fig. 5

6/6

0187164

Fig. 6

Fig. 7

Fig. 8

Fig. 9

Fig. 10